# EUROPÄISCHE PATENTSCHRIFT

(11) **EP 0 808 812 B1**
(45) Veröffentlichungstag und Bekanntmachung des Hinweises auf die Patenterteilung: **23.05.2001**
(21) Anmeldenummer: 97102716.4
(22) Anmeldetag: 19.02.1997
(51) Int. Cl.: C04B 38/10

(54) **Porosierter Mauerziegel**
Porous masonry brick
Brique poreuse pour maçonnerie

(30) Priorität: 19.02.1996 DE 19606111
(43) Veröffentlichungstag der Anmeldung: 26.11.1997
(73) Patentinhaber: Arbeitsgemeinschaft Mauerziegel e.V., 53113 Bonn (DE)
(72) Erfinder: Rimpel, Eckhard, 59192 Bergkamen (DE); Rehme, Friedrich, 44651 Herne (DE)
(74) Vertreter: Kuhnen & Wacker

(56) Entgegenhaltungen:
- EP-A- 0 341 150
- DE-C- 396 691
- FR-A- 1 381 834
- GB-A- 419 484
- GB-A- 1 042 591
- US-A- 1 944 007
- US-A- 1 948 878
- DATABASE WPI Week 9442 Derwent Publications Ltd., London, GB; AN 94-338135 XP002031759 & JP 06 263 560 A (BRITISCH AEROSPACE PLC)

## Beschreibung

Die Erfindung betrifft einen porosierten Mauerziegel für statisch belastbares Mauerwerk gemäß den Oberbegriffen der Ansprüche 1 und 2, sowie ein Verfahren zu dessen Herstellung gemäß den Oberbegriffen der Ansprüche 10 und 11.

In der Praxis werden beim Neubau von Gebäuden vielfach die bekannten porosierten Hochlochziegel verwendet, die eine Scherbenrohdichte von wenigstens 1,2 kg/dm³ aufweisen und deren Lochanteil ca. 50% beträgt. Die Verwendung derartiger Hochlochziegel stößt aber aufgrund verschärfter Vorschriften hinsichtlich der Wärmedämmung an ihre Grenzen. Um die Bestimmungen der gültigen Wärmeschutzverordnung bzw. der zu erwartenden weiteren Verschärfung der Vorschriften erfüllen zu können, besteht daher ein Bedarf an einem Mauerziegel, der eine Verminderung der Wärmeverluste gegenüber dem bisher bekannten Mauerziegel ermöglicht.

Hierzu ist es aus der Praxis bekannt, daß die Wärmeleitfähigkeit eines Mauerziegels bedeutend von seiner Scherbenrohdichte abhängt. Um also eine verringerte Wärmeleitfähigkeit zu erhalten, muß daher die Scherbenrohdichte vermindert werden. Dies führt allerdings zu einer verminderten Druckfestigkeit, wodurch die statische Belastbarkeit des Mauerwerks sinkt.

Eingehende Versuche zur Steigerung des Hohlraumanteils von derzeit ca. 50% ergaben aber auch, daß hier eine Grenze erreicht ist, an der eine praktische Verbesserung der Wärmedämmeigenschaften nur in sehr geringem Maße möglich ist. Dies begründet sich darin, daß durch den vergrößerten Hohlraum die Wärmeübertragungswege durch Konvektion und Strahlung zunehmend an Bedeutung gewinnen. Eine wesentliche Verbesserung der Wärmedämmeigenschaften eines Hochlochziegels mit einer Steigerung des Hohlraumanteils ist daher kaum möglich.

Ferner hat sich gezeigt, daß bei einer Steigerung des Porenanteils im Scherben beim bekannten Hochlochziegel eine wesentliche Minderung der Druckfestigkeit erkennbar ist. Dies wird darauf zurückgeführt, daß ab einem gewissen Porenanteil keine ausreichende keramische Bindung mehr im Ziegel vorliegt. Die Verwendung eines derartigen Hochlochziegels für statisch belastbares Mauerwerk ist daher in Frage gestellt.

Ein weiterer Grund, weshalb ein vergrößerter Porenanteil in einem Hochlochziegel in der Praxis kaum realisierbar ist, liegt darin, daß er mit den gegebenen Fertigungsmöglichkeiten kaum herstellbar ist. Die bekannten Hochlochziegel werden meist durch Strangpressen hergestellt, wobei dieses Verfahren derzeit mit der bekannten, minimalen Scherbenrohdichte von 1,2 kg/dm³ an seine Grenzen stößt.

Gleichzeitig würden die Stege zwischen den Hohlräumen bei einer Steigerung des Lochanteils immer dünner und dabei fester und steifer, worunter das Schallverhalten leiden würde.

Aber auch die Erhöhung der Porosität des bekannten Hochlochziegels mittels einem höheren Anteil an Porosionsmittel ist nicht geeignet, um einen in der Praxis verwendbaren Hochlochziegel zu schaffen. Hierzu haben Versuche gezeigt, daß ab einer Porosität ab ca. 35% kein beherrschbares Strangpressen des Hochlochziegels möglich ist. Ferner ist auch das Schneiden des Ziegels in seine Endform problematisch, da der Ziegel regelrecht zerbröselt. Dies begründet sich darin, daß die eingebrachten festen Bestandteile grobe Trennflächen zwischen den Bestandteilen bewirken, durch die das Material auseinandergehalten wird.

Weitere Versuche mit verschiedenen anderen Porosierungsmitteln anstelle der in der Regel verwendeten Sägemehl-, Kohlenstaub-, Zellulosebestandteilen und ähnlichem haben keine einschneidenden Verbesserungen der Eigenschaften erbracht.

Auch beim Einbringen von Perliten zeigten sich negative Auswirkungen, da diese eine Trennung zwischen den Partikeln bewirken, wodurch der Ziegel spröde wird. Aus den genannten Gründen ist daher keine ausreichende Druckfestigkeit für ein statisch belastbares Bauwerk erreichbar.

Andererseits weist ein aus Ton gebrannter Ziegel die bekannten vorteilhaften Eigenschaften auf, die ihn als geeigneten Bauwerkstoff auszeichnen. Durch seine geringe Gleichgewichtsfeuchte gewährleistet er kurze Austrocknungs-und damit auch Bauzeiten und sorgt gleichzeitig für ein behagliches Raumklima. Des weiteren ist er aufgrund seinem im Vergleich zu anderen Baustoffen günstigen Gewicht/Volumenverhältnis ein leicht zu verarbeitender Baustoff. Weitere wesentliche Vorteile im Vergleich zu anderen Massivbaustoffen sind die geringen Formänderungen infolge Feuchteeinfluß, Kriechen und Temperatur.

Aus dem Gebiet der Feuerfestprodukte und der Akkustikplatten sind ferner Keramikprodukte bekannt, welche mittels Schaumeinbringung in einen Tonschlicker o. ä. im Zuge der Herstellung porosiert werden. Beispiele hierfür sind in der GB 1,042,591, der US 1,944,007, der US 1,948,878, der FR 1.381.834, der JP 06 263 560 A, der DE 396 691 C, der EP 0 341 150 A1 und der GB 419,484 offenbart. Die hier offenbarten Produkte wie auch die verwendeten Schäume sind dabei auf den jeweiligen Anwendungszweck hin konzipiert.

Es ist daher Aufgabe der Erfindung, einen porosierten Mauerziegel für statisch belastbares Mauerwerk zu schaffen, der eine verbesserte Wärmedämmung ermöglicht, ohne wesentliche Nachteile hinsichtlich dem Schallverhalten und der Festigkeitseigenschaften hinnehmen zu müssen.

Diese Aufgabe wird gemäß einem ersten Aspekt der Erfindung durch einen Mauerziegel entsprechend den kennzeichnenden Merkmalen der nebengeordneten Ansprüche 1 und 2 gelöst.

Damit kann ein offenporiger Vollziegel geschaffen werden, der eine Porosität von über 75% aufweisen kann, aber keine großen zusammenhängenden Hohlräume enthält. Dadurch wird bei einer geringen Scherbenrohdichte und dementsprechend guten Wärmedämmeigenschaften überraschenderweise trotzdem ein relativ druckstabiles Ziegelelement geschaffen. Die aus baustatischen Gründen in der Regel erforderlichen Mindest-Steindruckfestigkeiten von 2,5 bis 5 N/mm² werden daher mit dem erfindungsgemäßen Mauerziegel erreicht. Damit stellt die Erfindung einen Mauerziegel einer neuen Generation vor, der neben guten Festigkeitseigenschaften eine deutliche Verbesserung der Wärmeleitfähigkeit im Vergleich zum herkömmlichen Hochlochziegel ermöglicht.

Dieser hohe Porositätsgrad wird durch das Ausbilden des Schaums ermöglicht, der die Abstände zwischen den Tonmineralien vergrößert, dabei aber weiterhin eine wirksame keramische Bindung zuläßt. Es entstehen somit zahlreiche Berührungsstellen der Tonminerale, welche beim Brennen miteinander verschweißen und so ein stabiles Gerüst ausbilden. Daher wird trotz der geringen Scherbenrohdichte eine vergleichsweise hohe Steindruckfestigkeit erreicht.

Ein weiterer Vorteil des erfindungsgemäßen Mauerziegels liegt darin, daß durch die homogene Verteilung der Poren und damit durch die Ausbildung einer Vielzahl von kleinen Hohlräumen, die in der Regel nicht miteinander verbunden sind, keine Konvektion auftritt. Die Wärmeübertragung im erfindungsgemäßen Mauerziegel beschränkt sich im wesentlichen auf die Wärmeleitung, wodurch aufgrund der vielen Poren und des damit verbundenen geringen Feststoffanteils sehr gute Wärmedämmeigenschaften erreicht werden.

Da keine großen und vor allem keine durchgängigen Hohlräume im Porenziegel vorliegen, kann beim Vermauern kein Mörtel in den Ziegelstein fallen und es werden keine unerwünschten Wärmebrücken verursacht.

Hierbei ist es von Vorteil, wenn der eingearbeitete Schaum gemäß Anspruch 1 ein Tensidschaum ist. Damit liegt ein gut vermischbarer, homogener Schaum vor, der beim Einarbeiten in die Tonemulsion gleichmäßig verteilt werden kann und die Ausbildung von Poren ermöglicht. Der Tensidschaum hat sich hier als vorteilhaft erwiesen, da er seine Schaumstruktur bei Verwendung von geeigneten Stabilisatoren auch dann beibehält, wenn er mit der Tonemulsion vermischt ist. Diesbezügliche Versuche haben ergeben, daß die Schaumstruktur von vielen anderen Schäumen beim Vermischen mit dem Ton zerstört wird, wodurch die die Ausbildung von Poren nicht möglich wäre. Gleichermaßen eignet sich auch ein Proteinschaum gemäß Anspruch 2 um diese vorteilhaften Wirkungen zu erreichen.

Von weiterem Vorteil ist es, daß dem eingearbeiteten Schaum ein Stabilisator zugesetzt ist. Damit wird sichergestellt, daß dieser nicht vor dem Trocknen zusammenbricht. Der Stabilisator verbessert daher die Beständigkeit des Schaumes und sorgt so dafür, daß sich die Poren ausbilden können.

Die Verwendung von Stabilisatoren hat sich überraschenderweise auch vorteilhaft für die Druckfestigkeit des fertigen Produkts erwiesen. Wie Versuche gezeigt haben, hat die Wahl eines geeigneten Stabilisators erheblichen Einfluß auf die Festigkeit des Mauerziegels, da er die Ausbildung der keramischen Bindung an den Tonmineralien positiv beeinflußt. Als Stabilisator wird hierbei vorteilhafterweise ein glasbildender Stoff, der z.B. Kieselsäure aufweist, verwendet.

Da die einzelnen Ziegel aufgrund der Nachbearbeitung sehr exakte Abmessungen aufweisen, läßt sich überdies durch die Verarbeitung mit Dünnbettmörtel (Fugendicke 1 bis 3 mm) ein Mauerwerk mit vergleichsweise hoher Wanddruckfestigkeit erstellen.

Gemäß einem weiteren Aspekt der Erfindung werden zur Lösung der Aufgabe Verfahren zur Herstellung eines porosierten Mauerziegels für statisch belastbares Mauerwerk gemäß den Ansprüchen 10 und 11 aufgezeigt.

Damit können die Herstellungsschritte einfach und gut beherrschbar gehalten werden, was vorteilhafterweise zu einer auch in der Massenproduktion gleichbleibenden Qualität des Mauerziegels führt.

Es sind zwar bereits porosierte Baustoffe, z.B. Porenbeton, bekannt, jedoch eignen sich diese nicht in entsprechender Weise für die erfindungsgemäße Verwendung. Die bekannten Porenbetonsteine können zwar gleichermaßen extrem niedrige Rohdichten aufweisen und an allen Seiten bearbeitet sein, bestehen jedoch gänzlich aus einem anderen Material. Porenbeton ist ein hydraulisch mit Bindemittel gebundener Wandbaustoff, der einem kalten Herstellungsprozeß unterworfen wird und eine geschlossenzellige Porenstruktur bewirkt. Hieraus ergibt sich ein ungünstiges Austrocknungsverhalten, das sehr langsam vonstatten geht.

Überdies treten bei der Herstellung von Porenbetonsteinen gänzlich andere Probleme auf, als bei der Herstellung der Porenziegel. Da der Porenbeton mittels eines kalten Herstellungsprozesses erzeugt wird, bestehen z.B. keine Schwierigkeiten hinsichtlich der thermischen Spannungen beim Brennen von Mauerziegeln.

Ferner wird das Blähverhalten bei Porenbeton durch Zugabe eines Aluminiumpulvers bewirkt, das als Treibmittel wirkt und ein vielfaches Aufblähen verursacht. Im Gegensatz zum erfindungsgemäßen Herstellungsverfahren entstehen dabei sehr große Blöcke von bis zu 5 m³, die dann in aufwendigen Verfahrensschritten zertrennt werden müssen.

Dem Porenbeton liegt daher eine gänzlich andere Problemstellung als dem erfindungsgemäßen Porenziegel zugrunde und das Produkt weist andere Eigenschaften auf.

Die Merkmale der Unteransprüche begründen vorteilhafte Weiterbildungen des erfindungsgemäßen porosierten Mauerziegels.

Wenn die Scherbenrohdichte unter 800 kg/m³ und insbesondere unter 500 kg/m³ abgesenkt ist, verbessern sich die Wärmedämmeigenschaften des Mauerziegels weiter. Daher können auch mögliche strengere Wärmeschutzverordnungen in der Zukunft erfüllt werden. Zudem verringert sich das Gewicht des Mauerziegels, wodurch er einfacher zu verarbeiten ist.

Als Stabilisator kommen dabei z.B. Stabilisatoren auf Wasserglas- oder wässriger Kieselsäuresolbasis in Betracht. In Versuchen mit Wasserglas als Stabilisator zeigte sich, daß die Berührungsstellen der Tonminerale gut benetzt werden. Ferner sorgt das Wasserglas dafür, daß die Berührungsstellen kleine Ausmaße annehmen. Während der Schaum also die Abstände zwischen den Tonmineralien vergrößert, reagiert das Wasserglas mit den Ziegeltonbestandteilen und steift die Verbindungsstellen zwischen den Poren aus. Dadurch läßt sich die Festigkeit und insbesondere die Druckfestigkeit des Mauerziegels wesentlich steigern. Der erfindungsgemäße Porenziegel ist daher in hervorragender Weise als Mauerziegel für tragendes Mauerwerk verwendbar.

Ferner hat sich als vorteilhaft erwiesen, als Grundsubstanz für den Mauerziegel einen feinkörnigen Ziegelton bzw. eine feinkörnige Ziegeltonmischung zu verwenden, die vorzugsweise eine Körnung von weniger als 1,5 mm und vorzugsweise von weniger als 1,0 mm aufweist. Im Ziegelton liegt dann ein Körnungsband vor, das im wesentlichen aus Tonmineralien mit Abmessungen von weniger als 50 nm besteht. Damit werden u.a. die physikalischen Eigenschaften der Wärmeleitfähigkeit, Porosität und Druckfestigkeit des Porenziegels vorteilhaft beeinflußt. Die Feinheit der Tonmineralien ermöglicht eine sehr gute Ausbildung der Poren. Gleichzeitig ist das Körnungsband der Tonmineralien aber doch nicht so fein, daß wesentliche Nachteile hinsichtlich des Trocknungsverhaltens in Kauf genommen werden müssen.

Dadurch, daß der Mauerziegel Porosierungsmittel aufweist, wird die Ausbildung der Poren zusätzlich unterstützt. Als Porosierungsmittel kommen dabei bekannte Zusätze, wie z.B. Sägemehl, Polystyrol und eventuell auch Faserstoffe wie Sägespäne oder Stroh in Betracht. Das Porosierungsmittel wird mit dem mit Wasser vermengten Ziegelton gemischt und bildet mit diesem eine zähe, aber gießfähige Flüssigkeit, die Emulsion bzw. den Schlicker. Diesem wird dann der vorgefertigte Schaum beigemischt. Damit läßt sich die Struktur des Porenziegels weiter verbessern.

Wenn der Rohlingsmasse zur Stabilisierung während des Produktionsprozesses faserige Substanzen wie Zelllulosefasern, Faserstoffe aus der Papierherstellung, Glas- oder Mineralfasern oder Fasern aus Tierhaaren zugegeben werden, wird eine Erhöhung des inneren Zusammenhalts der Masse erreicht. Dadurch können Risse aufgrund von inneren Spannungen der Rohlinge beim Trocknen vermieden werden.

Von weiterem Vorteil ist es, daß der erfindungsgemäße Mauerziegel eine Wärmeleitfähigkeit von weniger als 0,18 W/mK, vorzugsweise 0,14 W/mK oder weniger und insbesondere 0,09 W/mK oder weniger aufweist, da damit ein Baustoff vorliegt, mit dem die Wärmedämmeigenschaften im vergleich zum konventionellen Hochlochziegel wesentlich verbessert werden. Dieser Mauerziegel ist daher für einen universellen Einsatz in der Bauwirtschaft geeignet.

Gemäß einem weiteren Aspekt der Erfindung wird ein Mauerziegelblock aufgezeigt, der aus wenigstens zwei Mauerziegeln besteht, die werkseitig zu einer Einheit gefügt sind. Hierbei wird dem Umstand Rechnung getragen, daß aufgrund der beim Brennen auftretenden thermischen Spannungen im Inneren des Ziegels lediglich Elemente mit einer Dickenabmessung von weniger als ca. 15 cm herstellbar sind. Damit lassen sich also Ziegel mit einer Normmaß-Höhe von z.B. 124 mm herstellen. Durch das werkseitige Zusammenfügen zweier solcher Porenziegel läßt sich der in der Baubranche zur Zeit meist verwendete Hochformatziegel (Planziegel) mit einer Höhe von 249 mm schaffen. Damit vereinfacht sich die Verarbeitung des erfindungsgemäßen Mauerziegels auf der Baustelle wesentlich.

Überdies ist es auch möglich, eine größere Anzahl an Mauerziegeln miteinander zu verbinden und somit vorgefertigte Mauerelemente mit größeren Abmaßen herzustellen. Damit ließe sich der Verarbeitungsaufwand auf der Baustelle nochmals wesentlich reduzieren.

Die Erfindung wird im folgenden anhand den Figuren der Zeichnung näher erläutert. Es zeigt:
- Fig. 1: einen erfindungsgemäßen porosierten Mauerziegel;
- Fig. 2: einen erfindungsgemäßen Mauerziegel mit Tasche und Feder; und
- Fig. 3: ein Ablaufschema zur Herstellung des erfindungsgemäßen Mauerziegels.

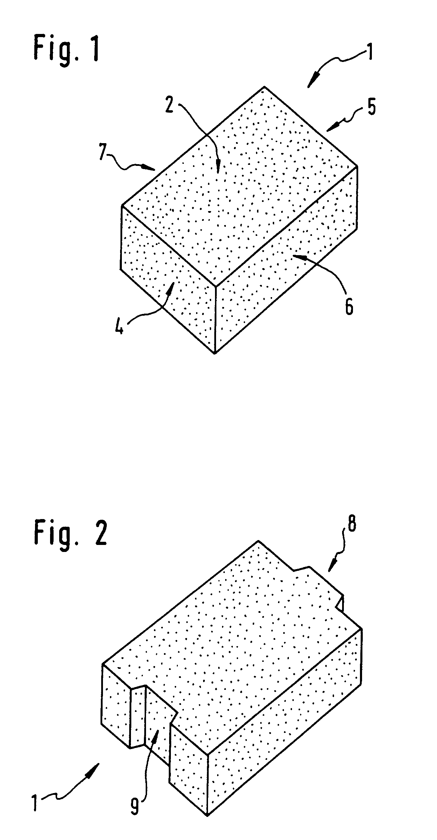

In Fig. 1 ist ein erfindungsgemäßer Mauerziegel 1 dargestellt. Dieser kann mit Steinlängen zwischen 247 und 498 mm, vorzugsweise 300 mm, Steinbreiten zwischen 100 und 490 mm, vorzugsweise 365 mm, und Steinhöhen zwischen 71 und 150 mm, vorzugsweise 124 mm, hergestellt werden.

Der Mauerziegel 1 weist homogen verteilte Poren auf, die ein offenporiges System bilden. Die Porosität beträgt ca. 75% und es wird eine Wärmeleitfähigkeit von 0,08 W/mK erreicht. Die Scherbenrohdichte beträgt dabei weniger als 500 kg/m³.

Der Mauerziegel 1 ist an allen Oberflächen materialabtragend bearbeitet und evtl geschliffen. Insbesondere eine obere Lagerfugenfläche 2 und eine untere Lagerfugenfläche 3 (nicht sichtbar in den Fig. 1 und 2) sind planparallel geschliffen. Ferner sind auch Stoßfugenflächen 4 und 5, sowie Außenflächen 6 und 7 durch Schleifen nachbearbeitet. In speziellen Fällen ist es aber auch möglich, auf eine Bearbeitung der Außenflächen 6 und 7 durch Schleifen zu verzichten.

Da alle Außenkanten des Mauersteins 1 nachbearbeitet sind, weist er eine sehr exakte Form auf, die die Verwendung von Dünnbettmörtel (Fugendicken 1 bis 3 mm, vorzugsweise 1 mm) erlaubt. Durch diese dünnen Fugen wird der festigkeitsmindernde Einfluß der normalen Fugen (Fugendicken 10 bis 12 mm) vermieden, so daß die Wanddruckfestigkeit im Vergleich zu Wandbaustoffen gleicher Steindruckfestigkeit mit Normalfugen deutlich verbessert werden kann.

Der Mauerstein 1 wird beim Verarbeiten unter Verwendung von Dünnbettmörtel oder ähnlichem zu einem Mauerwerk geschichtet.

In Fig. 2 ist eine abgewandelte Ausgestaltung des erfindungsgemäßen porosierten Mauersteins 1 aufgezeigt, die wie in der Praxis üblich an den Längsenden des Mauersteins 1 mit einer Feder 8 und einer Tasche 9 versehen ist, um eine bessere Verbindung bzw. Verzahnung zum benachbarten Stein herzustellen. Die Ausgestaltungsweise und die Anzahl der Federn und Taschen können dabei beliebig sein, wobei die in der Praxis derzeit üblichen Verzahnungsformen bevorzugt werden.

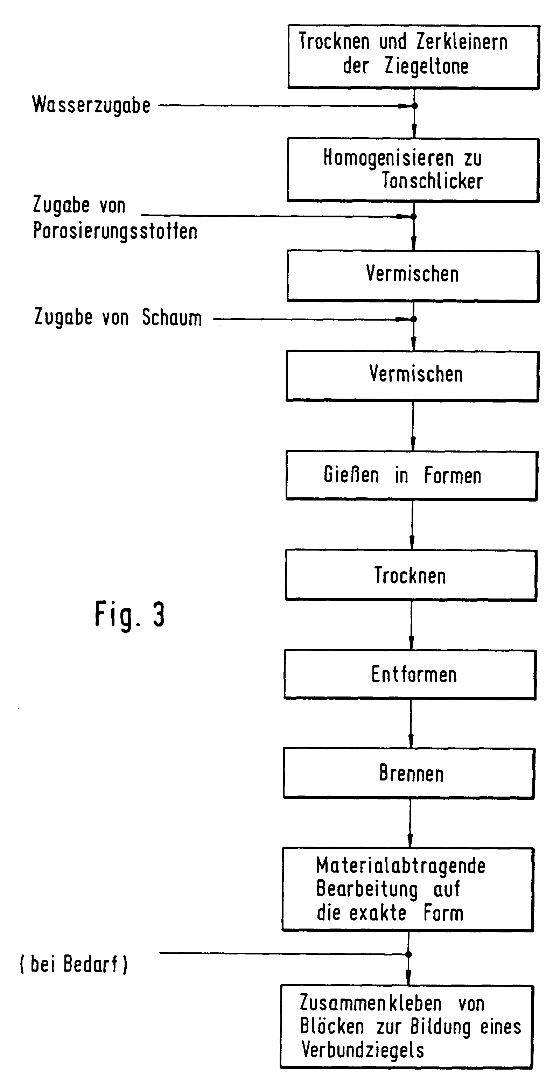

In Fig. 3 ist ein Ablaufschema eines beispielhaften Herstellungsverfahrens des porosierten Mauerziegels 1 aufgezeigt.

Der Herstellungsvorgang beginnt in der Regel mit der Aufbereitung der im Anlieferungszustand stückigen Ziegeltone. Diese werden bei ca. 50°C getrocknet und anschließend z.B. mittels eines Kollergangs zerkleinert. Der nunmehr feinkörnige Ton wird anschließend mit einer definierten Wassermenge vermischt, bis der Schlicker in homogener Form vorliegt.

Im nächsten Schritt wird ein Porosierungsstoff zugemischt.

In einem parallelen Schritt wird ein Tensidschaum in einer herkömmlichen Schaumkanone hergestellt. Dabei wird die Mischung aus Schaumbildner und Wasser mittels Preßluft durch einen Zylinder gedrückt, der Einbauten mit großer Oberfläche enthält. An diesen Elementen finden turbulente, den Schaum erzeugende Verwirbelungen statt. Diesem Schaum ist ferner ein Stabilisator auf Wasserglasbasis zugegeben. Der Schaum wird während dem Mischvorgang in einem Gegenstromzwangsmischer direkt den Tonschlickern zugeführt.

Als Schaumbildner kommen dabei z.B. ADDIMENT® Schaumbildner 2, Sorten-Nr. 10576 oder ADDIMENT® Schaumbildner 3, Sorten-Nr. 10577 der Fa. Heidelberger Baustofftechnik zum Einsatz. Die genannten Schaumbildner liegen in flüssiger Form vor und sind wasserlöslich. Der ADDIMENT® Schaumbildner 2 weist eine Dichte von 1,04 kg/dm³ auf und wird mit einem Verhältnis von 130-200 g/100 Liter Schaum verwendet. Das Schaumgewicht beträgt dabei 6-9 kg/100 Liter Schaum. Der ADDIMENT® Schaumbildner 3 weist eine Dichte von 1,08 kg/dm³ auf und wird mit einem Verhältnis von 150-230 g/100 Liter Schaum verwendet. Das Schaumgewicht beträgt dann 7-9 kg/100 Liter Schaum.

Der Tonschlicker wird mit dem Schaum vermischt, bis ein plastisches und gießfähiges, homogenes Gemenge vorliegt.

In einem weiteren Schritt erfolgt die Formgebung des Gemenges dann dadurch, daß es in eine Form gegossen und vergleichmäßigt wird. Damit werden Lunker und Inhomogenitäten vermieden. Die Formkästen bestehen aus Lochblech, damit ein allseitiges Trocknen der Formlinge möglich ist. Um ein Verkleben der Tonpaste mit den Blechformen zu vermeiden, werden diese vor dem Befüllen mit saugfähigem Recyclingpapier ausgekleidet.

Anschließend erfolgt die Trocknung des Formlings, wobei eine zügige Ansteifung der Tonpaste erreicht werden soll, bevor es zum Zerfall des Schaumes durch Verdunstung des in ihm befindlichen Wassers kommt. Daher wird ein hierzu ein klimagesteuerter Trockner eingesetzt.

Beim auf die Entformung nachfolgenden keramischen Brand kommt es zu einer Verdichtung und Verfestigung des geformten Rohlings. Der Brand der Porenziegel erfolgt in einem gasbeheizten Kammerofen bei oxidierter Atmosphäre.

Die aus dem Ofen kommenden Porenziegel werden anschließend auf die gewünschten Formate gesägt. Um den Porenziegel auf eine exakte Form zu bringen, ist in der Regel ein Nachschleifen aller sechs Oberflächen notwendig.

Damit lassen sich Porenziegel herstellen, die Rohdichten zwischen 200 kg/m³ und 500 kg/m³ aufweisen. Die erreichten Wärmeleitfähigkeiten bewegen sich zwischen etwa 0,07 W/mK und 0,14 W/mK, wobei Art und Zusammensetzung des Ton-Lehm-Gemischs und die Körnung eine wesentliche Rolle spielen.

Da das Wasserglas mit dem Schlicker reagiert, verbleibt zwischen dem Zumischen des Stabilisators in den Schaum und dem Vergießen der schaumigen Rohtonmasse in Formen nur sehr kurze Zeit. Die Formgebung ist aber, wie sich aus den Versuchen gezeigt hat, technisch beherrschbar und kann insbesondere in der Massenfertigung sicher gesteuert werden.

Das Wasserglas sorgt als Stabilisator dafür, daß der Schaum nicht zusammenbricht, bevor die Ansteifung der Tonpaste erreicht ist. Ferner benetzt das Wasserglas die Berührungsstellen der Tonminerale zwischen den Poren und bewirkt, daß diese kleine Ausmaße annehmen. Daher werden viele Berührungsstellen ausgebildet und es entsteht ein stabiles Gerüst, wodurch eine relativ hohe Druckfestigkeit erreicht wird. Damit beeinflußt das Wasserglas auch die Eigenschaften des fertigen Produkts.

Das geeignetste Mischungsverhältnis zwischen Schaum und Schlicker ist abhängig vom verwendeten Ziegelton, dem Schaumbildner und den gewünschten Eigenschaften des fertigen Produkts. Insbesondere die Zusammensetzung des Tons variiert je nach geographischer Abstammung wesentlich. Eine Anpassung an die jeweiligen Gegebenheiten ist daher notwendig. Das Volumenverhältnis des Schaums gegenüber dem Ton beträgt daher in der Regel weniger als 3:1 und um eine ausreichende Druckfestigkeit sicherzustellen wird ein Wert unter dem Verhältnis 2:1 bevorzugt.

Die erfindungsgemäßen porosierten Mauerziegel 1 lassen sich derzeit nur in Platten mit einer Dicke von maximal 15 cm herstellen, da beim Brennen thermische Spannungen im Inneren des Ziegels hervorgerufen werden, die ein Zerbersten des Ziegels mit einer größeren Dicke verursachen würden. Um trotzdem einen normalen Hochformatziegel erhalten zu können, ist es z.B. möglich, zwei Platten mit einer Höhe von 124 mm zu verkleben. Hierzu ist ein Dünnbettmörtel vorgesehen. Diese Verklebung kann werkseitig vorgenommen werden, so daß der Mauerziegel 1 als Block im derzeit üblichen Höhenformat von ca. 249 mm an die Baustelle geliefert werden kann.

Das Vermauern des Ziegels 1 erfolgt durch Dünnbettmörtel und da aufgrund der Nachbearbeitung aller sechs Oberflächen ein sehr maßhaltiger Stein vorliegt, ist es trotz verminderter Druckfestigkeit des einzelnen Ziegels gegenüber dem herkömmlichen Ziegel möglich, eine Wanddruckfestigkeit mit derselben Größenordnung zu erhalten, wie bei herkömmlichen Ziegeln. Daher tritt kein Stabilitätsverlust der Gesamtmauer auf.

Es können hierbei verschiedenste Tone bzw. Tonmischungen zum Einsatz kommen.

Die Erfindung läßt neben den hier aufgezeigten Beispielen weitere Gestaltungsansätze zu.

So kann anstelle des verwendeten Stabilisators auf Wasserglasbasis auch einer auf wässriger Kieselsäuresolbasis oder jeder beliebige weitere Stoff auf Kieselsäurebasis zur Verwendung kommen. Darüber hinaus sind auch andere Stoffe denkbar, die geeignet sind, um den Schaum zu stabilisieren, bis der Ziegel ausreichend getrocknet ist. Dadurch behalten die Poren ihre Form bei. Vorteilhaft ist es ferner, wenn der Stabilisator zudem noch in der Lage ist, die Verbindungsstellen zwischen den Poren, also die Berührungsstellen, zu benetzen und damit auszusteifen.

Voraussetzung hierzu ist allerdings, daß der Stabilisator sich mit dem Tensidschaum verträgt, oder daß ein anderer Schaumbildner zum Einsatz kommt.

Neben dem hier aufgezeigten Tensidschaum kann dementsprechend auch ein anderer geeigneter organischer oder anorganischer Schaum zum Einsatz kommen. In den Versuchen wurden z.B. mit einem organischen Schaum auf Eiweißbasis, also einem Proteinschaum, gute Ergebnisse erzielt.

Die Ausbildung des Schaums kann auch in der Rohlingsmasse erfolgen, wobei ein Schaumbildner und Wasser mit der Rohlingsmasse vermischt werden und anschließend das so hergestellte wäßrige Gemenge durch eine Rühreinrichtung u.ä. aufgeschäumt wird.

Der porosierte Mauerziegel 1 kann auch als flächiges Plattenelement ausgebildet werden, und somit z.B. als Wärmedämmplatte dienen. Mit dieser als Wandverkleidung könnte z.B. eine Verbesserung der Wärmedämmung im Gebäudebestand erfolgen.

Die Erfindung schafft somit einen porosierten Mauerziegel 1 für statisch belastbares Mauerwerk, der als homogener Vollstein ausgebildet ist und eine offenzellige Struktur aufweist. Damit läßt sich eine sehr geringe Scherbenrohdichte erreichen, was zu einer geringen Wärmeleitfähigkeit führt. Gleichzeitig kann aber durch die Art des zugemischten Schaumes und des verwendeten Stabilisators bewirkt werden, daß sich an den Porengrenzen ein stabiles Gerüst ausbildet, welches relativ hohe Druckfestigkeiten ermöglicht. Der porosierte Mauerziegel 1 kann daher statisch belastet werden und eignet sich für die Verwendung in Trag- und Außenmauern. Da der Mauerziegel 1 keine großen Hohlräume aufweist, zeigt er zudem im Verhältnis zur Gewichtskurve nach DIN 4109 verbesserte Schalldämmeigenschaften.

## Patentansprüche

1. Porosierter Mauerziegel (1) für statisch belastbares Mauerwerk, der als Vollstein ausgebildet ist,
**dadurch gekennzeichnet,**
daß die Scherbenrohdichte des Ziegels durch Ausbilden von Schaum auf Wasserbasis mit Schaumbildner in der Rohlingsmasse während des Produktionsprozesses auf einen Wert von unter 1100 kg/m³ abgesenkt ist, und
daß der erzeugte Schaum ein Tensidschaum ist, dem ein Stabilisator zugesetzt ist, welcher Kieselsäure enthält,
wobei der Ziegel (1) nach dem Brennen an allen sechs Oberflächen (2, 3, 4, 5, 6, 7) materialabtragend bearbeitet ist und eine Mindest-Steindruckfestigkeit von 2,5 bis 5 N/mm² aufweist.

2. Porosierter Mauerziegel (1) für statisch belastbares Mauerwerk, der als Vollstein ausgebildet ist,
**dadurch gekennzeichnet,**
daß die Scherbenrohdichte des Ziegels durch Ausbilden von Schaum auf Wasserbasis mit Schaumbildner in der Rohlingsmasse während des Produktionsprozesses auf einen Wert von unter 1100 kg/m³ abgesenkt ist, und
daß der erzeugte Schaum ein Proteinschaum ist, dem ein Stabilisator zugesetzt ist, welcher Kieselsäure enthält,
wobei der Ziegel (1) nach dem Brennen an allen sechs Oberflächen (2, 3, 4, 5, 6, 7) materialabtragend bearbeitet ist und eine Mindest-Steindruckfestigkeit von 2,5 bis 5 N/mm² aufweist.

3. Mauerziegel nach Anspruch 1 oder 2, dadurch gekennzeichnet, daß die Scherbenrohdichte unter 800 kg/m³ und insbesondere unter 500 kg/m³ abgesenkt ist.

4. Mauerziegel nach einem der Ansprüche 1 bis 3, dadurch gekennzeichnet, daß die Kieselsäure insbesondere auf Wasserglas- oder wässriger Kieselsäuresolbasis basiert.

5. Mauerziegel nach einem der Ansprüche 1 bis 4, dadurch gekennzeichnet, daß er aus einem feinkörnigen Ton hergestellt ist, der eine Körnung von weniger als 1,5 mm, vorzugsweise von weniger als 1,0 mm aufweist.

6. Mauerziegel nach einem der Ansprüche 1 bis 5, dadurch gekennzeichnet, daß er unter Verwendung wenigstens eines weiteren Porosierungsmittels hergestellt ist.

7. Mauerziegel nach einem der Ansprüche 1 bis 6, dadurch gekennzeichnet, daß der Rohlingsmasse zur Stabilisierung während des Produktionsprozesses faserige Substanzen wie Zellulosefasern, Faserstoffe aus der Papierherstellung, Glas- oder Mineralfasern oder Fasern aus Tierhaaren zugegeben sind.

8. Mauerziegel nach einem der Ansprüche 1 bis 7, dadurch gekennzeichnet, daß er eine Wärmeleitfähigkeit von weniger als 0,18 W/mK, vorzugsweise 0,14 W/mK oder weniger und insbesondere 0,09 W/mK oder weniger aufweist.

9. Verwendung von wenigstens zwei werksseitig zu einer Einheit gefügten Mauerziegel (1) nach einem der Ansprüche 1 bis 8 zur Ausbildung eines Mauerziegelblocks.

10. Verfahren zur Herstellung eines porosierten Mauerziegels (1) für statisch belastbares Mauerwerk, mit den Schritten:
Vermischen feinkörniger Ziegeltone mit Wasser zur Ausbildung von Tonschlicker,
Zugabe von Schaum in den Tonschlicker und Vermischen zu einem im wesentlichen homogenen Gemenge,
Gießen des Gemenges in Formen,
Trocknen des geformten Rohlings,
Entformen des Rohlings aus der Form,
Brennen des Rohlings, und
materialabtragende Bearbeitung der Oberflächen (2, 3, 4, 5, 6, 7) des Ziegels (1),
wobei der verwendete Schaum ein Tensid- oder Proteinschaum ist und wobei dem Schaum vor der Zugabe zum Tonschlicker ein Stabilisator, insbesondere ein Stabilisator mit Kieselsäure, zugesetzt wird, und
wobei durch die Zugabe von Schaum bei Aufrechterhaltung einer wirksamen keramischen Bindung zahlreiche Berührungsstellen der Tonminerale entstehen, welche beim Brennen miteinander verschweißen und so ein stabiles Gerüst ausbilden, so daß der Mauerziegel (1) eine Mindest-Steindruckfestigkeit von 2,5 bis 5 N/mm² aufweist.

11. Verfahren zur Herstellung eines porosierten Mauerziegels (1) für statisch belastbares Mauerwerk, mit den Schritten:
Vermischen feinkörniger Ziegeltone mit Wasser zur Ausbildung von Tonschlicker,
Zugabe eines Schaumbildners in den Tonschlicker und Vermischen mit Wasser zu einem im wesentlichen homogenen Gemenge,
Aufschäumen des wäßrigen Gemenges,
Gießen des Gemenges in Formen,
Trocknen des geformten Rohlings,
Entformen des Rohlings aus der Form,
Brennen des Rohlings, und
materialabtragende Bearbeitung der Oberflächen (2, 3, 4, 5, 6, 7) des Ziegels (1),
wobei der verwendete Schaum ein Tensid- oder Proteinschaum ist und wobei dem Schaum vor der Zugabe zum Tonschlicker ein Stabilisator, insbesondere ein Stabilisator mit Kieselsäure, zugesetzt wird, und
wobei durch das Aufschäumen des Gemenges bei Aufrechterhaltung einer wirksamen keramischen Bindung zahlreiche Berührungsstellen der Tonminerale entstehen, welche beim Brennen miteinander verschweißen und so ein stabiles Gerüst ausbilden, so daß der Mauerziegel (1) eine Mindest-Steindruckfestigkeit von 2,5 bis 5 N/mm² aufweist.

12. Verfahren nach Anspruch 10 oder 11, dadurch gekennzeichnet, dem Tonschlicker vor der Zugabe des Schaums Porosierungsstoffe zugegeben und mit dem Tonschlicker vermischt werden.

13. Verfahren nach einem der Ansprüche 10 bis 12, dadurch gekennzeichnet, daß der Rohlingsmasse zur Stabilisierung während des Produktionsprozesses faserige Substanzen wie Zellulosefasern, Faserstoffe aus der Papierherstellung, Glas- oder Mineralfasern oder Fasern aus Tierhaaren zugegeben werden.

## Claims

1. Porous masonry brick (1) for statically-loadable masonry, designed as a solid brick,
characterised in that
- the crude density of the shards of the brick is reduced by the formation of foam on a water base with foaming agents in the substance of the rough casting during the production process to a value of less than 1100 kg/m3, and
- the foam to be produced is a tenside foam, to which a stabilizer is added which contains silicic acid, whereby the brick (1), after baking, is worked on all six surfaces (2, 3, 4, 5, 6, 7) with material being removed, and features a minimum masonry compressive strength of 25 to 5 N/mm2.

2. Porous masonry brick (1) for statically-loadable masonry, designed as a solid brick,
characterised in that
- the crude density of the shards of the brick is reduced by the formation of foam on a water base with foaming agents in the substance of the rough casting during the production process to a value of less than 1100 kg/m3, and
- the foam to be produced is a protein foam, to which a stabilizer is added which contains silicic acid, whereby the brick (1), after baking, is worked on all six surfaces (2, 3, 4, 5, 6, 7) with material being removed, and features a minimum masonry compressive strength of 25 to 5 N/mm2.

3. Masonry brick according to Claim 1 or 2, characterised in that the crude shard density is reduced to less than 800 kg/m3 and in particular to less than 500 kg/m3.

4. Masonry brick according to Claims 1 to 3, characterised in that the silicic acid is based in particular on a water glass or aqueous silicic acid sol base.

5. Masonry brick according to Claims 1 to 4, characterised in that it is manufactured from a fine-grain clay, which features a grain size of less than 15 mm, for preference of less than 1.0 mm.

6. Masonry brick according to Claims 1 to 5, characterised in that it is manufactured with the use of at least one additional porous-rendering agent.

7. Masonry brick according to Claims 1 to 6, characterised in that fibrous substances are added to the rough casting for stabilization during the production process, such as cellulose fibres, fibre substances from paper manufacture, glass or mineral fibres, or fibres made from animal hairs.

8. Masonry brick according to Claims 1 to 7, characterised in that it features a thermal conductivity value of less than 0.18 W/mK, for preference 0.14 W/mK or less, and in particular 0.09 W/mK or less.

9. Use of at least two masonry bricks (1), jointed on site to form a unit, according to one of Claims 1 to 8, for the formation of a masonry brick block.

10. Process for the manufacture of a porous masonry brick (1) for statically-loadable masonrywork, with the stages:
Mixing of fine-grain brick clay with water to form clay silt,
Addition of foam to the clay silt and mixing to form an essentially homogenous
substance,
Casting of the substance in moulds,
Drying the rough casting so formed,
Removal of the casting from the mould,
Baking of the rough casting, and
Material-removing processing of the surfaces (2, 3, 4, 5, 6, 7) of the brick (1),
whereby the foam used is a tenside or protein foam, and whereby a stabilizer, in particular a stabilizer with silicic acid, is added to the foam before it is added to the clay silt, and
whereby, by the addition of foam with the maintaining of an effective ceramic bond, numerous contact points of the clay mineral are formed, which weld to one another during baking, and so form a stable structure, so that the masonry brick (1) features a minimum brick compressive strength of 25 to 5 N/mm2.

11. Process for the manufacture of a porous masonry brick (1) for statically-loadable masonrywork, with the stages:
Mixing of fine-grain brick clay with water to form clay silt,
Addition of a foam former to the clay silt and mixing to form an essentially homogenous substance,
Foaming of the aqueous substance,
Casting of the substance in moulds,
Drying the rough casting so formed,
Removal of the casting from the mould,
Baking of the rough casting, and
Material-removing processing of the surfaces (2, 3, 4, 5, 6, 7) of the brick (1),
whereby the foam used is a tenside or protein foam, and whereby a stabilizer, in particular a stabilizer with silicic acid, is added to the foam before it is added to the clay silt, and
whereby, by the foaming of the substance with the maintaining of an effective ceramic bond, numerous contact points of the clay mineral are formed, which weld to one another during baking, and so form a stable structure, so that the masonry brick (1) features a minimum brick compressive strength of 25 to 5 N/mm2.

12. Process according to Claims 10 or 11, characterised in that porous-rendering substances are added to the clay silt before the addition of the foam, and are mixed with the clay silt.

13. Process according to one of Claims 10 to 12, characterised in that fibrous substances are added to the rough casting substance for stabilization during the production process, such as cellulose fibres, fibre substances from paper manufacture, glass or mineral fibres, or fibres from animal hairs.

## Revendications

1. Brique (1) à porosités pour maçonnerie exposable à une charge statique et conçue comme brique pleine, caractérisée en ce que la masse volumique apparente de la pâte de la brique est abaissée au cours du processus de production à une valeur de moins de 1100 kg/m³ par formation de mousse à base d'eau avec de l'agent moussant dans la masse de l'ébauche, et en ce que la mousse produite est une mousse de tensio-actif à laquelle est ajouté un stabilisant contenant de l'acide silicique, ladite brique (1) étant usinée par enlèvement de copeaux sur toutes ses six faces (2, 3, 4, 5, 6, 7) après sa cuisson et présentant une résistance minimale à la compression de 2,5 à 5 N/mm².

2. Brique (1) à porosités pour maçonnerie exposable à une charge statique et conçue comme brique pleine, caractérisée en ce que la masse volumique apparente de la pâte de la brique est abaissée au cours du processus de production à une valeur de moins de 1100 kg/m³ par formation de mousse à base d'eau avec de l'agent moussant dans la masse de l'ébauche, et en ce que la mousse produite est une mousse protéique à laquelle est ajouté un stabilisant contenant de l'acide silicique, ladite brique (1) étant usinée par enlèvement de copeaux sur toutes ses six faces (2, 3, 4, 5, 6, 7) après sa cuisson et présentant une résistance minimale à la compression de 2,5 à 5 N/mm².

3. Brique selon la revendication 1 ou 2, caractérisée en ce que la masse volumique apparente de la pâte est abaissée à moins de 800 kg/m³ et en particulier à moins de 500 kg/m³.

4. Brique selon l'une des revendications 1 à 3, caractérisée en ce que l'acide silicique est basé en particulier sur du verre soluble ou une base de sol d'acide silicique aqueux.

5. Brique selon lune des revendications 1 à 4, caractérisée en ce qu'elle est produite à partir d'une argile à grains fins présentant une granularité inférieure à 1,5 mm, de préférence inférieure à 1,0 mm.

6. Brique selon l'une des revendications 1 à 5, caractérisée en ce qu'elle est fabriquée en utilisant au moins un agent formateur de porosités supplémentaire.

7. Brique selon lune des revendications 1 à 6, caractérisée en ce que pour la stabiliser, on ajoute à la masse de l'ébauche, au cours du processus de production, des substances fibreuses comme des fibres cellulosiques, des substances fibreuses issues de la production de papier, des fibres de verre ou minérales ou des fibres de poils d'animaux.

8. Brique selon l'une des revendications 1 à 7, caractérisée en ce qu'elle présente une conductivité thermique inférieure à 0,18 W/mK, de préférence de 0,14 W/mK ou moins et en particulier de 0,09 W/mK ou moins.

9. , Utilisation d'au moins deux briques (1) selon l'une des revendications 1 à 8 assemblées en une unité à l'usine, pour former un bloc de briques.

10. Procédé de production dyne brique (1) à porosités pour ouvrage de maçonnerie exposable à une charge statique, comprenant les opérations consistant à:
mélanger des terres argileuses à grains fins avec de l'eau, pour former une barbotine d'argile,
ajouter de la mousse dans la barbotine d'argile et mélanger en vue d'obtenir une mixture sensiblement homogène,
couler la mixture dans des moules,
sécher l'ébauche formée,
démouler l'ébauche,
cuire l'ébauche, et
usiner les six faces (2, 3, 4, 5, 6, 7) de la brique (1) par enlèvement de copeaux,
la mousse utilisée étant une mousse de tensio-actif ou protéique à laquelle on ajoute un stabilisant, en particulier un stabilisant à l'acide silicique, avant son adjonction pour former la barbotine,
ajouter la mousse ayant pour effet de créer, tout en conservant une liaison céramique efficace, une multitude de points de contact des minéraux des argiles réfractaires qui se soudent à la cuisson et forent ainsi une charpente stable, en sorte que ladite brique (1) présente une résistance minimum à la compression minimale de 2,5 à 5 N/mm².

11. Procédé de production d'une brique (1) à porosités pour ouvrage de maçonnerie exposable à une charge statique, comprenant les opérations consistant à :
mélanger des terres argileuses à grains fins avec de l'eau, pour former une barbotine d'argile,
ajouter de la mousse dans la barbotine d'argile et mélanger en vue d'obtenir une mixture sensiblement homogène,
faire mousser la mixture aqueuse,
couler la mixture dans des moules,
sécher l'ébauche formée,
démouler l'ébauche,
cuire l'ébauche, et
usiner les six faces (2, 3, 4, 5, 6, 7) de la brique (1) par enlèvement de copeaux,
la mousse utilisée étant une mousse de tensio-actif ou protéique à laquelle on ajoute un stabilisant, en particulier un stabilisant à l'acide silicique, avant son adjonction pour former la barbotine,
transformer la mixture en mousse ayant pour effet de créer, tout en conservant une liaison céramique efficace, une multitude de points de contact des minéraux des argiles réfractaires qui se soudent à la cuisson et forent ainsi une charpente stable, en sorte que ladite brique (1) présente une résistance minimum à la compression minimale de 2,5 à 5 N/mm².

12. Procédé selon la revendication 10 ou 11, caractérisé en ce que des agents formateurs de porosités sont ajoutés à la barbotine d'argile et mélangés à la barbotine d'argile avant l'adjonction de la mousse.

13. Procédé selon lune des revendications 10 à 12, caractérisé en ce que pour la stabiliser, on ajoute à la masse de l'ébauche, au cours du processus de production, des substances fibreuses comme des fibres cellulosiques, des substances fibreuses issues de la production de papier, des fibres de verre ou minérales ou des fibres de poils d'animaux.
